# EUROPEAN PATENT APPLICATION

(11) **EP 4 664 615 A1**
(43) Date of publication of application: **17.12.2025**
(21) Application number: 25170870.7
(22) Date of filing: 16.04.2025
(51) Int. Cl.: H01M 50/103, H01M 50/536, H01M 50/54

(54) **SECONDARY BATTERY AND METHOD OF MANUFACTURING SAME**

(30) Priority: 13.06.2024 JP 2024095711
(71) Applicant: Prime Planet Energy & Solutions, Inc., Chuo-ku, Tokyo 103-0022 (JP)
(72) Inventor: MIYAMURA, Yukinobu, Tokyo, 103-0022 (JP); WAKIMOTO, Ryoichi, Tokyo, 103-0022 (JP)
(74) Representative: Kuhnen & Wacker Patent- und Rechtsanwaltsbüro PartG mbB

(57) **Abstract**

In a secondary battery, a first electrode assembly (201) and a second electrode assembly (202) are overlapped with each other. A first electrode tab (250) and a third electrode tab (280) each connected to a first electrode (240) and respectively included in the first electrode assembly (201) and the second electrode assembly (202) are joined to a first current collector (431). The first current collector (431) is constituted of a first stack in which a plurality of metal plates (4300) are stacked. A second electrode (210) of each of the first electrode assembly (201) and the second electrode assembly (202) has a polarity different from that of the first electrode (240). A second electrode tab (220) and a fourth electrode tab (270) each connected to the second electrode (210) are joined to a second current collector (410).

## Description

### CROSS REFERENCE TO RELATED APPLICATIONS

This nonprovisional application is based on Japanese Patent Application No. 2024-095711 filed on June 13, 2024 with the Japan Patent Office, the entire contents of which are hereby incorporated by reference.

### BACKGROUND OF THE INVENTION

### Field of the Invention

The present technology relates to a secondary battery and a method of manufacturing the secondary battery.

### Description of the Background Art

Japanese Patent No. 4537353 discloses a prismatic battery in which a positive electrode terminal is provided on a side surface of a battery case on one side and a negative electrode terminal is provided at an end portion of the battery case on the other side.

Japanese Patent Laying-Open No. 2021-099936 discloses a battery in which a tab group connected to a current collector is bent.

### SUMMARY OF THE INVENTION

It has been required to increase an energy density of a secondary battery. Moreover, it has been also required to increase reliability of the secondary battery. From these viewpoints, there is still room for improvement in conventional secondary batteries.

An object of the present technology is to provide a secondary battery having high energy density and high reliability and a method of manufacturing the secondary battery.

The present technology provides the following secondary battery and the following method of manufacturing the secondary battery.
[1] A method of manufacturing a secondary battery, wherein the secondary battery includes a first electrode assembly and a second electrode assembly each including a first electrode and a second electrode having a polarity different from a polarity of the first electrode, a case that accommodates the first electrode assembly and the second electrode assembly, and a first electrode terminal electrically connected to the first electrode, the first electrode assembly includes a first electrode tab disposed at an end portion of the first electrode assembly on one side and electrically connected to the first electrode, and a second electrode tab disposed at an end portion of the first electrode assembly on the other side and electrically connected to the second electrode, the second electrode assembly includes a third electrode tab disposed at an end portion of the second electrode assembly on one side and electrically connected to the first electrode, and a fourth electrode tab disposed at an end portion of the second electrode assembly on the other side and electrically connected to the second electrode, the secondary battery further includes a first current collector to which the first electrode tab is joined, the first current collector being constituted of a first stack in which a plurality of metal plates are stacked, and a second current collector to which the second electrode tab and the fourth electrode tab are joined, the method comprising: producing the first electrode assembly and the second electrode assembly; after producing the first electrode assembly and the second electrode assembly, joining the first electrode tab to the first current collector; after producing the first electrode assembly and the second electrode assembly, attaining a state in which the second electrode tab and the fourth electrode tab are electrically connected to the second current collector with the first electrode assembly being disposed on one side with respect to the second current collector and the second electrode assembly being disposed on the other side with respect to the second current collector; after the second electrode tab and the fourth electrode tab are electrically connected to the second current collector, overlapping the first electrode assembly and the second electrode assembly with each other by bending the second electrode tab and the fourth electrode tab; and after overlapping the first electrode assembly and the second electrode assembly with each other, electrically connecting, to the first electrode terminal, the first current collector joined to the first electrode tab.
[2] The method of manufacturing a secondary battery according to [1], wherein the secondary battery further includes a third current collector to which the third electrode tab is joined, the third current collector being constituted of a second stack in which a plurality of metal plates are stacked, the method further comprising: after overlapping the first electrode assembly and the second electrode assembly with each other, electrically connecting, to the first electrode terminal, the third current collector joined to the third electrode tab.
[3] The method of manufacturing a secondary battery according to [1], further comprising: after overlapping the first electrode assembly and the second electrode assembly with each other, joining the third electrode tab to the first current collector.
[4] The method of manufacturing a secondary battery according to any one of [1] to [3], further comprising: after electrically connecting, to the first electrode terminal, the first current collector joined to the first electrode tab, bending the first current collector.
[5] The method of manufacturing a secondary battery according to any one of [1] to [4], wherein the secondary battery further includes a second electrode terminal electrically connected to the second electrode, the case includes a case main body provided with a first opening located at an end portion of the case on one side and a second opening located at an end portion of the case on the other side, a first sealing plate that seals the first opening, and a second sealing plate that seals the second opening, the first electrode terminal is provided on the first sealing plate, and the second electrode terminal is provided on the second sealing plate, the method further comprising: electrically connecting, to the second electrode terminal, the second current collector joined to the second electrode tab and the fourth electrode tab; after electrically connecting the second current collector to the second electrode terminal, inserting the first electrode assembly and the second electrode assembly into the case main body with the first current collector side being inserted first.
[6] The method of manufacturing a secondary battery according to [5], wherein the electrically connecting the first current collector to the first electrode terminal is performed with the first electrode assembly and the second electrode assembly being disposed in the case main body after inserting the first electrode assembly and the second electrode assembly into the case main body.
[7] The method of manufacturing a secondary battery according to any one of [1] to [6], wherein the first current collector includes a first portion at which the plurality of metal plates are joined together, and a second portion at which the plurality of metal plates are not joined together, and the first current collector is bent at the second portion.
[8] The method of manufacturing a secondary battery according to any one of [2] and [4] to [7], wherein the first current collector and the third current collector are curved in the same direction with the first electrode assembly and the second electrode assembly being overlapped with each other.
[9] The method of manufacturing a secondary battery according to any one of [1] to [8], wherein a first electrode tab group in which a plurality of the first electrode tabs are stacked is provided, and a total thickness of the first current collector is larger than a total thickness of the first electrode tab group.
[10] A secondary battery comprising: a first electrode assembly and a second electrode assembly each including a first electrode and a second electrode having a polarity different from a polarity of the first electrode; a case that accommodates the first electrode assembly and the second electrode assembly; and a first electrode terminal electrically connected to the first electrode, wherein the first electrode assembly includes a first electrode tab disposed at an end portion of the first electrode assembly on one side and electrically connected to the first electrode, and a second electrode tab disposed at an end portion of the first electrode assembly on the other side and electrically connected to the second electrode, the second electrode assembly includes a third electrode tab disposed at an end portion of the second electrode assembly on one side and electrically connected to the first electrode, and a fourth electrode tab disposed at an end portion of the second electrode assembly on the other side and electrically connected to the second electrode, the secondary battery further comprising: a first current collector to which the first electrode tab is joined, the first current collector being constituted of a first stack in which a plurality of metal plates are stacked; and a second current collector to which the second electrode tab and the fourth electrode tab are joined, wherein the first current collector and the second current collector are disposed to be overlapped with each other, the second electrode tab and the fourth electrode tab are curved in directions in which tips of the second electrode tab and the fourth electrode tab come close to each other, and the first current collector is bent.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.

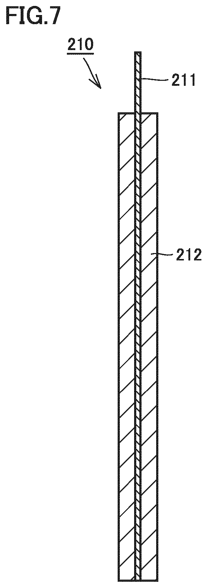

Fig. 7 is a cross sectional view of a negative electrode (cross sectional view along VII-VII in Fig. 8).
Fig. 8 is a front view showing the negative electrode.

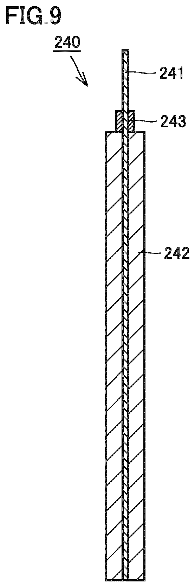

Fig. 9 is a cross sectional view of a positive electrode (cross sectional view along IX-IX in Fig. 10).
Fig. 10 is a front view showing the positive electrode.
Fig. 11 is a diagram showing a configuration around a negative electrode current collector.
Fig. 12 is a diagram showing a configuration around a positive electrode current collector.
Fig. 13 is a flowchart showing a method of manufacturing the secondary battery.
Fig. 14 is a diagram showing a state in which a current collector is joined to a first electrode assembly and a second electrode assembly .
Fig. 15 is a diagram showing a state in which a sealing plate is assembled to a current collector on the negative electrode side.
Fig. 16 is a diagram showing a state in which the first electrode assembly and the second electrode assembly are overlapped with each other.
Fig. 17 is a diagram showing a step of inserting the first electrode assembly and the second electrode assembly into a case main body.
Fig. 18 is a diagram showing a state in which a sealing plate is assembled to a current collector on the positive electrode side.
Fig. 19 is a diagram showing a state in which an opening of the case main body is sealed.
Fig. 20 is a diagram showing a metal plate of the current collector.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

In the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

In the present specification, the terms "comprise", "include", and "have" are open-end terms. That is, when a certain configuration is included, a configuration other than the foregoing configuration may or may not be included.

In the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" may include a lithium ion battery as well as a nickel-metal hydride battery, a sodium-ion battery, and the like. In the present specification, the term "electrode" may collectively represent a positive electrode and a negative electrode.

In the figures, when an electrode assembly included in the secondary battery is a stacked type electrode assembly, an X direction is defined as a long-side direction of a stacked surface, whereas when the electrode assembly is a wound type electrode assembly, the X direction is defined as a direction along a winding axis thereof. Further, a Y direction is defined as a short-side direction of the electrode assembly when viewed in the X direction, and a Z direction is defined as a long-side direction of the electrode assembly when viewed in the X direction. In order to facilitate understanding of the invention, the size of each configuration in the figures may be illustrated to be changed from its actual size.

In the present specification, the X direction may be referred to as a "width direction" of each of a secondary battery 1, an electrode assembly 200, and a case main body 110, the Z direction may be referred to as a "height direction" of each of secondary battery 1, electrode assembly 200, and case main body 110, and the Y direction may be referred to as a "thickness direction" of each of secondary battery 1, electrode assembly 200, and case main body 110.

### (Overall Configuration of Battery)

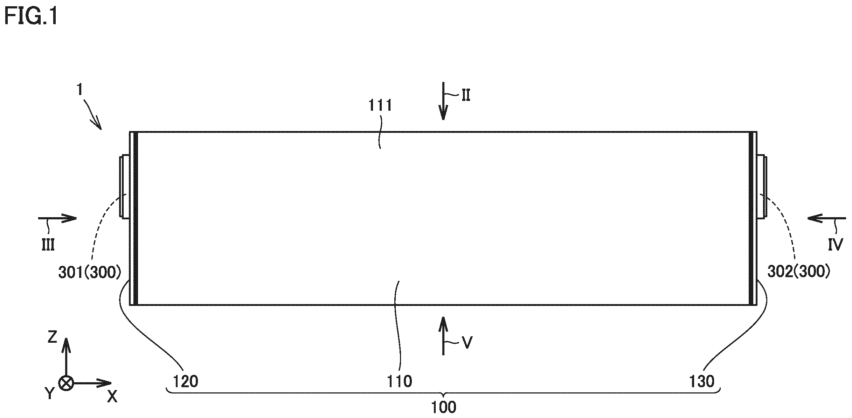

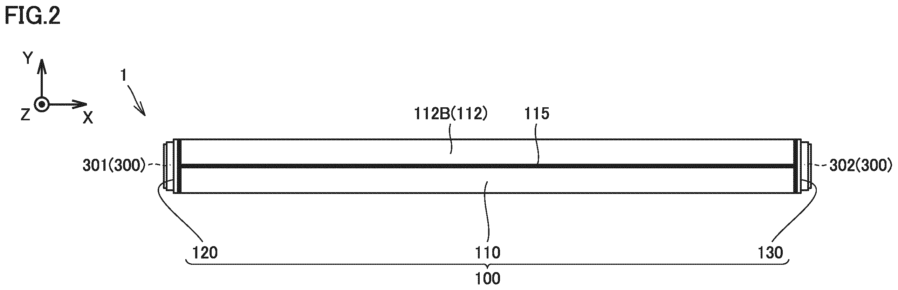

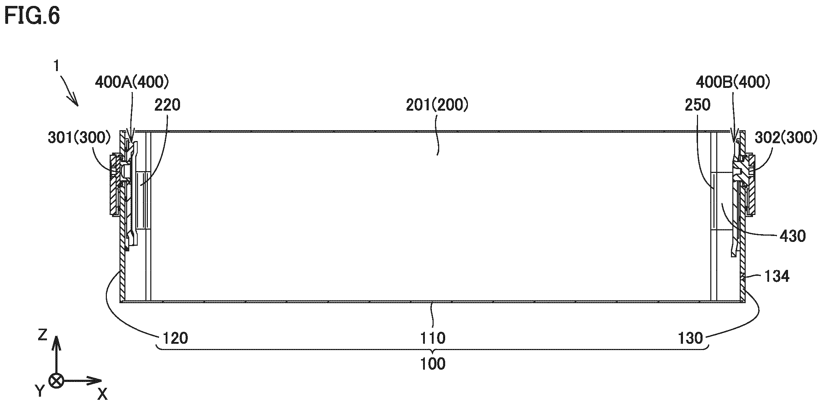

Fig. 1 is a front view of a secondary battery 1 according to an embodiment. Figs. 2 to 5 are diagrams showing states of secondary battery 1 shown in Fig. 1 when viewed in directions of arrows II, III, IV, and V respectively. Fig. 6 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 6, secondary battery 1 includes a case 100, electrode assembly 200, electrode terminals 300, and current collectors 400. Case 100 includes a case main body 110, a sealing plate 120, and a sealing plate 130.

When forming a battery assembly including secondary battery 1, a plurality of secondary batteries 1 are arranged in the thickness direction of each of the plurality of secondary batteries 1. Secondary batteries 1 arranged may be restrained in the arrangement direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, sealing plate 120 and sealing plate 130 are provided at respective end portions of case main body 110. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature. Moreover, the secondary battery in the present technology is not necessarily limited to the prismatic secondary battery.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 has an area larger than that of each of the pair of second side surface portions 112.

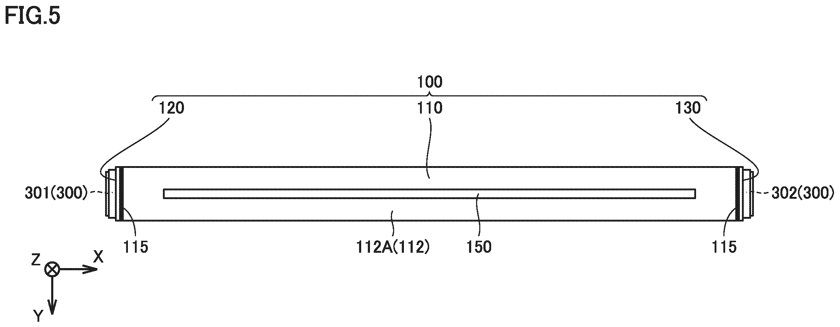

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. The shape of gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member constituting case main body 110 are joined to each other.

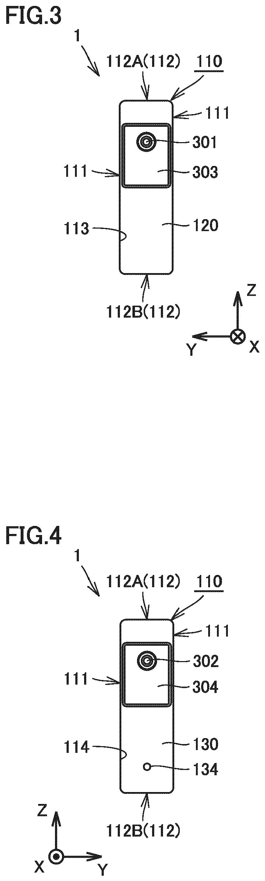

As shown in Fig. 3, an opening 113 (second opening) is provided at an end portion of case main body 110 on the -X side in the X direction. Opening 113 is sealed by sealing plate 120 (second sealing plate). Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. The substantially rectangular shape includes a rectangular shape or a generally rectangular shape such as a rectangular shape having corners each with a curvature.

A negative electrode terminal 301 (second electrode terminal) is provided on sealing plate 120. The position of negative electrode terminal 301 can be appropriately changed. Negative electrode terminal 301 is exposed to the outside of sealing plate 120.

As shown in Fig. 4, an opening 114 (first opening) is provided at an end portion of case main body 110 on the +X side in the X direction. Opening 114 is located at an end portion opposite to opening 113, and openings 113, 114 face each other. Opening 114 is sealed by sealing plate 130 (first sealing plate). Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 is provided with a positive electrode terminal 302 (first electrode terminal) and an injection hole 134. The positions of positive electrode terminal 302 and injection hole 134 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 is electrically connected to a negative electrode of electrode assembly 200. Negative electrode terminal 301 is attached to sealing plate 120, i.e., case 100. Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301. Negative electrode terminal 301 is connected to a plate-shaped member 303.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

Positive electrode terminal 302 is electrically connected to a positive electrode of electrode assembly 200. Positive electrode terminal 302 is attached to sealing plate 130, i.e., case 100. Positive electrode terminal 302 is composed of a conductive material (more specifically, a metal), and can be composed of aluminum, an aluminum alloy, or the like, for example. Positive electrode terminal 302 is exposed to the outside of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 can be formed by, for example, laser welding or the like.

Injection hole 134 is sealed by a sealing member (not shown). As the sealing member, for example, a blind rivet or another metal member can be used.

Electrode assembly 200 is an electrode assembly having a flat shape and having a below-described positive electrode and a below-described negative electrode stacked on each other. Specifically, electrode assembly 200 is, for example, a stacked type electrode assembly in which a plurality of positive electrodes and a plurality of negative electrodes are alternately stacked with separators (not shown) being interposed therebetween. However, in the present specification, the "electrode assembly" is not limited to the stacked type electrode assembly, and may be a wound type electrode assembly in which a strip-shaped positive electrode and a strip-shaped negative electrode are wound together with a strip-shaped separator being interposed therebetween. The separator can be constituted of, for example, a microporous membrane composed of polyolefin. When the electrode assembly is the stacked type electrode assembly including the plurality of positive electrodes and the plurality of negative electrodes, positive electrode tabs provided on the positive electrodes can be stacked to form a positive electrode tab group, and negative electrode tabs provided on the negative electrodes can be stacked to form a negative electrode tab group.

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and an electrolyte solution (electrolyte) (not shown) are accommodated inside an insulating sheet (not shown) disposed in case 100. Instead of the electrolyte solution, a solid electrolyte may be used.

First electrode assembly 201 includes a main body portion having a substantially rectangular shape, a negative electrode tab group 220, and a positive electrode tab group 250. Negative electrode tab group 220 is located at an end portion of first electrode assembly 201 on the -X side with respect to the main body portion thereof in the X direction. Positive electrode tab group 250 is located at an end portion of first electrode assembly 201 on the +X side with respect to the main body portion thereof in the X direction.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Electrode assembly 200 is electrically connected to negative electrode terminal 301 and positive electrode terminal 302 through current collectors 400.

Negative electrode current collector 400A is electrically connected to negative electrode tab group 220 and negative electrode terminal 301. Negative electrode current collector 400A can be composed of a conductive material (more specifically, a metal such as copper or a copper alloy).

Positive electrode current collector 400B is electrically connected to positive electrode tab group 250 and positive electrode terminal 302. Positive electrode current collector 400B can be composed of a conductive material (more specifically, a metal such as aluminum or an aluminum alloy).

### (Configuration of Electrode Assembly 200)

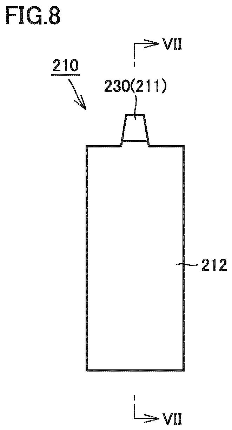

As shown in Fig. 8, negative electrode 210 (second electrode) includes a negative electrode core body 211 and a negative electrode active material layer 212. Negative electrode core body 211 is a copper foil or a copper alloy foil. Negative electrode active material layer 212 is formed by applying a negative electrode active material layer slurry using a die coater.

A negative electrode tab 230 constituted of negative electrode core body 211 is provided at one end portion, in the width direction, of negative electrode 210. When negative electrodes 210 are stacked, a plurality of negative electrode tabs 230 are stacked to form negative electrode tab group 220. The length of each of the plurality of negative electrode tabs 230 in the plurality of negative electrodes 210 in the protruding direction is appropriately adjusted in consideration of the state in which negative electrode tab group 220 is connected to negative electrode current collector 400A. The shape of negative electrode tab 230 is not limited to the one illustrated in Fig. 8.

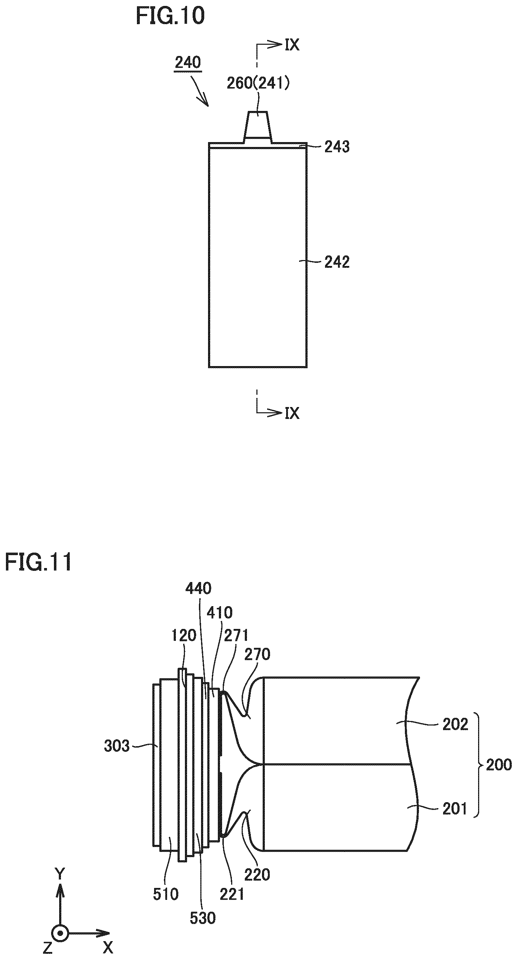

As shown in Fig. 10, positive electrode 240 (first electrode) has a polarity different from a polarity of negative electrode 210. Positive electrode 240 includes a positive electrode core body 241, a positive electrode active material layer 242, and a positive electrode protective layer 243. Positive electrode core body 241 is an aluminum foil or an aluminum alloy foil. Positive electrode active material layer 242 is formed on positive electrode core body 241 by applying a positive electrode active material layer slurry using a die coater.

A positive electrode tab 260 constituted of positive electrode core body 241 is provided at one end portion, in the width direction, of positive electrode 240. When positive electrodes 240 are stacked, a plurality of positive electrode tabs 260 are stacked to form positive electrode tab group 250. The length of each of positive electrode tabs 260 in the plurality of positive electrodes 240 in the protruding direction is appropriately adjusted in consideration of the state in which positive electrode tab group 250 is connected to positive electrode current collector 400B. The shape of positive electrode tab 260 is not limited to the one illustrated in Fig. 10.

Positive electrode protective layer 243 is provided at the root of positive electrode tab 260. It should be noted that positive electrode protective layer 243 may not necessarily be provided.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

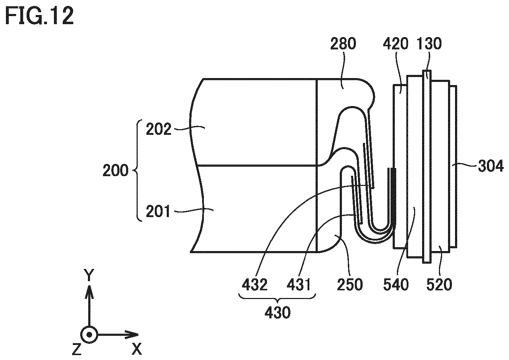

As shown in Figs. 11 and 12, electrode assembly 200 includes first electrode assembly 201 and a second electrode assembly 202. Each of first electrode assembly 201 and second electrode assembly 202 includes positive electrode 240 and negative electrode 210. Electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

First electrode assembly 201 includes positive electrode tab group 250 (first electrode tab) disposed at an end portion (Fig. 12) of first electrode assembly 201 on one side and electrically connected to positive electrode 240, and negative electrode tab group 220 (second electrode tab) disposed at an end portion (Fig. 11) of first electrode assembly 201 on the other side and electrically connected to negative electrode 210.

Second electrode assembly 202 includes a positive electrode tab group 280 (third electrode tab) disposed at an end portion (Fig. 12) of second electrode assembly 202 on one side and electrically connected to positive electrode 240, and a negative electrode tab group 270 (fourth electrode tab) disposed at an end portion (Fig. 11) of second electrode assembly 202 on the other side and electrically connected to negative electrode 210.

As shown in Fig. 11 (structure on the negative electrode side), negative electrode tab groups 220, 270 are electrically connected to a current collector 410 (negative electrode current collector 400A). Current collector 410 (second current collector) to which negative electrode tab group 220 and negative electrode tab group 270 are joined can be constituted of a plate-shaped member composed of a metal. Moreover, current collector 410 may be constituted of a single member.

Negative electrode tab group 220 has a curved portion 221. Curved portion 221 is a portion at which negative electrode tab group 220 is curved. Negative electrode tab group 270 has a curved portion 271. Curved portion 271 is a portion at which negative electrode tab group 270 is curved.

Negative electrode tab group 220 and negative electrode tab group 270 are curved in opposite directions such that their tip portions come close to each other.

Moreover, the tip portions of negative electrode tab group 220 and negative electrode tab group 270 are separated from each other in the present embodiment; however, the present technology is not limited to this configuration, and the tip portions of negative electrode tab group 220 and negative electrode tab group 270 may be in contact with each other.

Current collector 410 electrically connects negative electrode terminal 301 to negative electrode tab group 220 and negative electrode tab group 270. Current collector 410 has a long-side direction in the Z direction and a short-side direction in the Y direction.

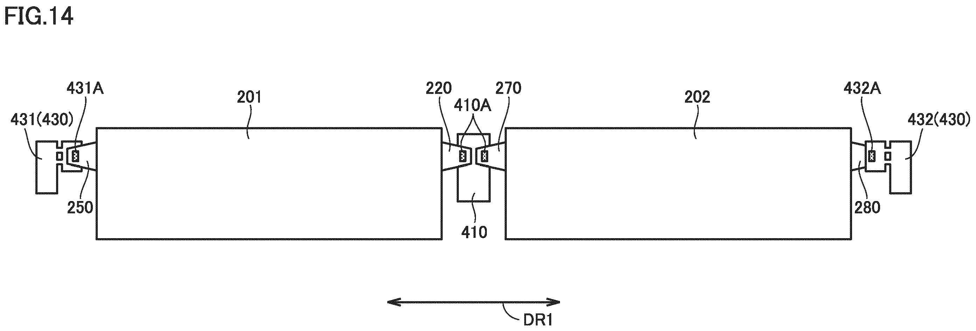

Each of negative electrode tab group 220 and negative electrode tab group 270 is joined to current collector 410 at a below-described joining portion 410A (see Fig. 14). Joining portion 410A can be formed by, for example, ultrasonic joining, resistance welding, laser welding, swaging, or the like.

An insulating member 510 is disposed between plate-shaped member 303 and sealing plate 120. An insulating member 530 is disposed between current collector 410 and sealing plate 120. It should be noted that negative electrode terminal 301 may be electrically connected to sealing plate 120, and sealing plate 120 may function as negative electrode terminal 301.

A spacer (not shown) may be disposed between sealing plate 120 and the main body portion (each of negative electrode tab groups 220, 270 is not included) of electrode assembly 200. The spacer can be composed of a resin member having an insulating property. Each of negative electrode tab groups 220, 270 passes internal to the spacer, thereby protecting each of negative electrode tab groups 220, 270.

As shown in Fig. 12 (structure on the positive electrode side), positive electrode tab group 250 and positive electrode tab group 280 are electrically connected to current collectors 430 (positive electrode current collector 400B). More specifically, positive electrode tab group 250 is joined to a current collector 431, and positive electrode tab group 280 is joined to a current collector 432.

The lengths of positive electrode tab groups 250, 280 can be appropriately changed. The lengths of positive electrode tab groups 250, 280 are preferably the same, but may be different from each other. The length of each of positive electrode tab groups 250, 280 may be shorter than that of each of negative electrode tab groups 220, 270 or may be longer than that of each of negative electrode tab groups 220, 270.

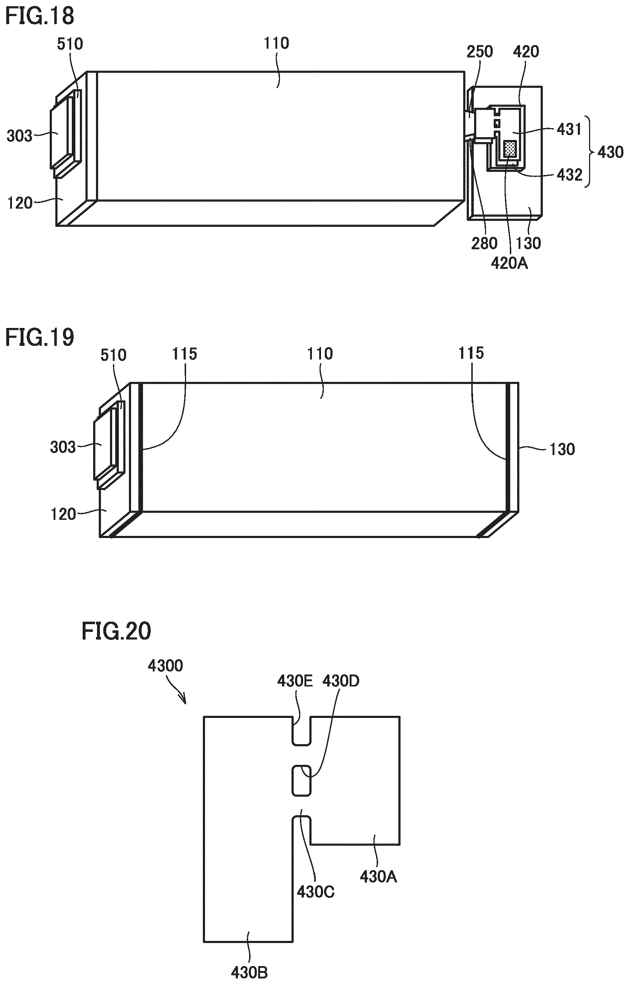

Current collector 431 (first current collector) to which positive electrode tab group 250 is joined is constituted of a stack (first stack) in which a plurality of metal plates 4300 (see Fig. 20) described later are stacked. Similarly, current collector 432 (third current collector) to which positive electrode tab group 280 is joined is constituted of a stack (second stack) in which a plurality of metal plates 4300 (see Fig. 20) are stacked. In each of current collectors 431, 432, the number of metal plates 4300 stacked is 2 or more, is preferably, for example, 3 or more, and is more preferably 5 or more. Further, for example, the number of metal plates 4300 stacked can be 20 or less, is preferably 15 or less, and is more preferably 10 or less. It should be noted that the same can be applied to a case where a current collector in which metal plates are stacked is used on the negative electrode side.

Current collectors 431, 432 electrically connect positive electrode terminal 302 to positive electrode tab group 250 and positive electrode tab group 280. Each of current collectors 431, 432 is joined to current collector 420 in a bent state, and is electrically connected to positive electrode terminal 302.

Since current collectors 430 are constituted of two separate current collectors 431, 432, a more stable current collecting structure can be formed. However, the scope of the present technology is not limited thereto, and positive electrode tab group 250 and positive electrode tab group 280 may be joined to one current collector 430, for example. By joining positive electrode tab group 250 and positive electrode tab group 280 to one current collector 430, the joining step can be simplified (the number of times of performing the joining step can be reduced).

In the example of Fig. 12, current collectors 431, 432 and current collector 420 are joined together at a portion (joining portion 420A in Fig. 18) at which current collectors 431, 432 are overlapped with each other. It should be noted that the scope of the present technology is not limited thereto, and each of current collectors 431, 432 may be joined to current collector 420 at positions separated from or adjacent to each other in current collector 420.

Positive electrode tab group 250 and positive electrode tab group 280 are respectively joined to current collectors 431, 432 at joining portions 431A, 432A (see Fig. 14) described later. Each of joining portions 431A, 432A can be formed by ultrasonic joining, resistance welding, laser welding, swaging, or the like, for example.

Joining portion 431A between current collector 431 and positive electrode tab group 250 and joining portion 432A between current collector 432 and positive electrode tab group 280 are formed at positions separated from each other on the X-Y plane.

As shown in Fig. 12, positive electrode tab group 250 is disposed between an end portion of current collector 431 on the electrode assembly 200 side (left side in the figure) and an end portion of current collector 432 on the electrode assembly 200 side (left side in the figure) in the X direction (clearance between current collectors 431, 432). Positive electrode tab group 280 may be disposed in the clearance between current collectors 431, 432, or both positive electrode tab groups 250, 280 may be disposed in the clearance between current collectors 431, 432. Thus, the clearance between current collectors 431, 432 can be effectively utilized.

An insulating member 520 is disposed between plate-shaped member 304 and sealing plate 130. An insulating member 540 is disposed between positive electrode terminal 302 and sealing plate 130. It should be noted that positive electrode terminal 302 may be electrically connected to sealing plate 130, and sealing plate 130 may function as positive electrode terminal 302.

A spacer (not shown) may be disposed between sealing plate 130 and the main body portion (positive electrode tab groups 250, 280 are not included) of electrode assembly 200. The spacer can be composed of a resin member having an insulating property. Since each of positive electrode tab groups 250, 280 passes internal to spacer 600, each of positive electrode tab groups 250, 280 is protected.

### (Manufacturing Process for Secondary Battery 1)

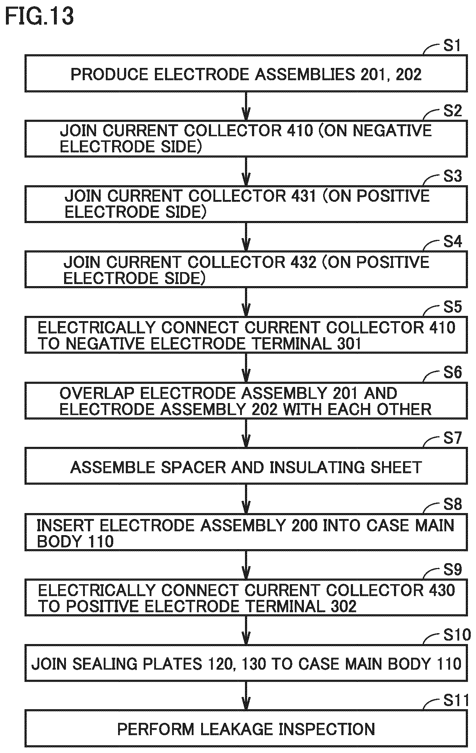

Hereinafter, a method of manufacturing the secondary battery according to the present embodiment will be described. Fig. 13 is a flowchart showing a method of manufacturing secondary battery 1.

As shown in Fig. 13, the method of manufacturing secondary battery 1 includes: a step (S1) of producing first electrode assembly 201 and second electrode assembly 202; a step (S2) of joining negative electrode tab group 220 and negative electrode tab group 270 to current collector 410; a step (S3) of joining positive electrode tab group 250 to current collector 431; a step (S4) of joining positive electrode tab group 280 to current collector 432; a step (S5) of electrically connecting, to negative electrode terminal 301, current collector 410 joined to negative electrode tab group 220 and negative electrode tab group 270; a step (S6) of overlapping first electrode assembly 201 and second electrode assembly 202 with each other; a step (S7) of assembling the spacer and the insulating sheet to electrode assembly 200; a step (S8) of inserting first electrode assembly 201 and second electrode assembly 202 into case main body 110; a step (S9) of electrically connecting, to positive electrode terminal 302, current collectors 431, 432 joined to positive electrode tab groups 250, 280; a step (S10) of joining sealing plates 120, 130 to case main body 110 so as to seal openings 113, 114; and a step (S11) of performing a leakage inspection.

Each of Figs. 14 to 19 is a diagram showing a step in the method of manufacturing secondary battery 1.

In the step (S1) of producing first electrode assembly 201 and second electrode assembly 202, parts of the tips of negative electrode tab group 220, positive electrode tab group 250, negative electrode tab group 270, and positive electrode tab group 280 are preferably cut such that they have the same tip length when bundled.

As shown in Fig. 14, after producing first electrode assembly 201 and second electrode assembly 202, negative electrode tab groups 220, 270 are joined to current collector 410 (S2), positive electrode tab group 250 is joined to current collector 431 (S3), and positive electrode tab group 280 is joined to current collector 432 (S4).

Each of negative electrode tab groups 220, 270 is joined to current collector 410 at joining portion 410A. Positive electrode tab group 250 is joined to current collector 431 at joining portion 431A. Positive electrode tab group 280 is joined to current collector 432 at joining portion 432A.

Current collector 431, first electrode assembly 201, current collector 410, second electrode assembly 202, and current collector 432 are arranged side by side in this order in a direction of arrow DR1.

In the example of Fig. 14, in the height direction of each of first electrode assembly 201 and second electrode assembly 202, each of current collector 410 and current collectors 431, 432 is disposed on one side with respect to the center of a corresponding one of first electrode assembly 201 and second electrode assembly 202. Moreover, in the height direction of each of first electrode assembly 201 and second electrode assembly 202, each of negative electrode tab group 220, positive electrode tab group 250, negative electrode tab group 270, and positive electrode tab group 280 is disposed on one side with respect to the center of a corresponding one of first electrode assembly 201 and second electrode assembly 202.

It should be noted that the scope of the present technology is not limited thereto, and in the height direction of each of first electrode assembly 201 and second electrode assembly 202, each of current collectors 410 and current collectors 431, 432 may be disposed at the center of a corresponding one of first electrode assembly 201 and second electrode assembly 202. Moreover, in the height direction of each of first electrode assembly 201 and second electrode assembly 202, each of negative electrode tab group 220, positive electrode tab group 250, negative electrode tab group 270, and positive electrode tab group 280 may be disposed at the center of a corresponding one of first electrode assembly 201 and second electrode assembly 202.

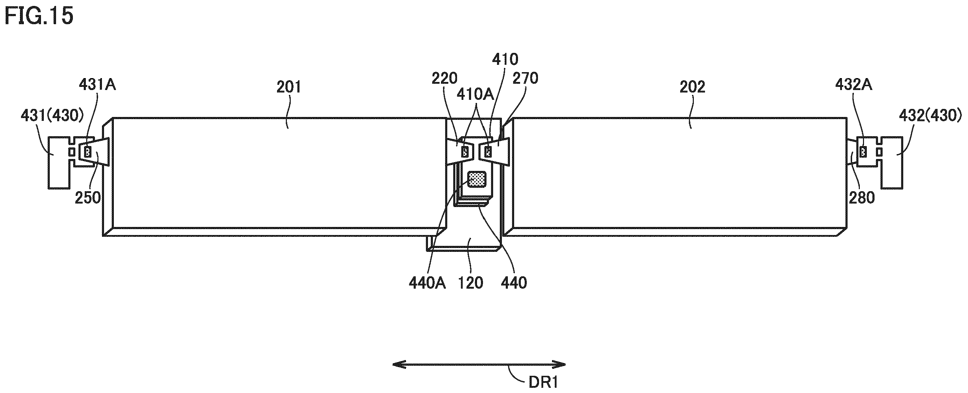

As shown in Fig. 15, current collector 410 joined to negative electrode tab group 220 and negative electrode tab group 270 is assembled to sealing plate 120. Current collector 440 and negative electrode terminal 301 are attached to sealing plate 120 in advance. Current collector 410 is assembled to sealing plate 120 with current collector 440 being interposed therebetween. Current collector 410 is joined to current collector 440 at a joining portion 440A. Joining portion 440A can be formed by laser welding or the like, for example. As a result, current collector 410 is electrically connected to negative electrode terminal 301 (S5).

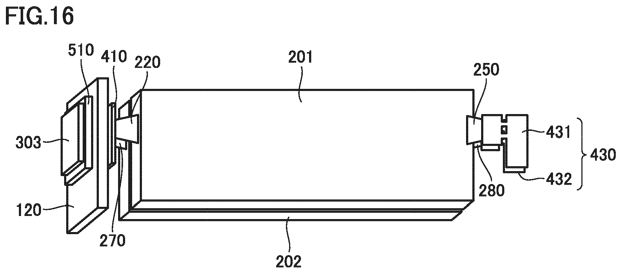

As shown in Fig. 16, negative electrode tab group 220 and negative electrode tab group 270 are bent in the thickness direction of each of first electrode assembly 201 and second electrode assembly 202 (direction orthogonal to the DR1 direction in Figs. 14 and 15) so as to overlap first electrode assembly 201 and second electrode assembly 202 with each other (S6). Here, negative electrode tab group 220 and negative electrode tab group 270 are bent such that their tip portions face each other.

When "overlapping" first electrode assembly 201 and second electrode assembly 202 with each other, first electrode assembly 201 and second electrode assembly 202 may be overlapped with each other directly, or another member may be disposed between first electrode assembly 201 and second electrode assembly 202. Further, first electrode assembly 201 and second electrode assembly 202 may or may not be fixed by a tape or the like.

The spacer and the insulating sheet are assembled to electrode assembly 200 (S7). It should be noted that the spacer and the insulating sheet are not necessarily essential in the present technology. The insulating sheet does not necessarily need to cover the entire surface of electrode assembly 200. When electrode assembly 200 is covered with the insulating sheet, the spacer is preferably also covered with the insulating sheet.

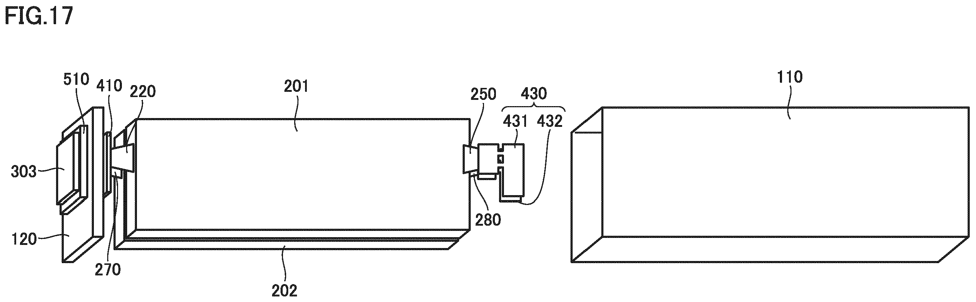

As shown in Fig. 17, first electrode assembly 201 and second electrode assembly 202 overlapped with each other are inserted into case main body 110 with the current collector 430 side being inserted first (S8).

When inserting electrode assembly 200 into case main body 110, electrode assembly 200 may be pulled from the positive electrode side, or may be pushed from the negative electrode side. When electrode assembly 200 is pushed from the negative electrode side, negative electrode tab group 220 and negative electrode tab group 270 can be curved at the same time.

As shown in Fig. 18, after electrode assembly 200 is inserted into case main body 110, each of current collectors 430 joined to positive electrode tab group 250 and positive electrode tab group 280 is assembled to sealing plate 130. Current collector 420 and positive electrode terminal 302 are attached to sealing plate 130 in advance. Current collector 430 is assembled to sealing plate 130 with current collector 420 being interposed therebetween. Current collector 410 is joined to current collector 420 at joining portion 420A. Joining portion 420A can be formed by laser welding or the like, for example. As a result, current collector 430 is electrically connected to positive electrode terminal 302 (S9).

Current collectors 431, 432 joined to positive electrode tab groups 250, 280 are electrically connected to positive electrode terminal 302, and are then bent into the shape shown in Fig. 12 together with positive electrode tab groups 250, 280. Current collectors 431, 432 are preferably bent at the same time, but current collectors 431, 432 may be bent sequentially.

As shown in Fig. 19, sealing plates 120, 130 are joined to case main body 110 (step S10). Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S11). After the leakage inspection, secondary battery 1 is dried to remove moisture in case 100. Then, the electrolyte solution is injected into case 100 through injection hole 134. When injecting the electrolyte solution, case 100 is inclined with sealing plate 130 facing upward and sealing plate 120 facing downward, thereby injecting the electrolyte solution into case 100 via injection hole 134 of sealing plate 130. Thereafter, charging is performed to result in release of gas. For performing the charging to result in release of gas, injection hole 134 may be temporarily sealed. Thereafter, injection hole 134 is sealed, thereby completing secondary battery 1.

The order of the step of inserting electrode assembly 200 and the step of connecting the current collectors is not limited to the above-described example. For example, the order of the steps (S2 to S4) of joining current collectors 410, 431, 432 can be appropriately changed.

In the present embodiment, it has been illustratively described that current collector 430 is electrically connected to positive electrode terminal 302 (S9) with first electrode assembly 201 and second electrode assembly 202 being completely disposed in case main body 110 after completing the step (S8) of inserting first electrode assembly 201 and second electrode assembly 202 into the main body of case 100; however, positive electrode terminal 302 and electrode assembly 200 may be electrically connected (S9) before completely ending the step (S8) of inserting electrode assembly 200 into case main body 110 (during the insertion step).

It has been illustratively described in the present embodiment that current collectors 431, 432 are bent after the step (S9) of electrically connecting current collectors 431, 432 to positive electrode terminal 302; however, current collectors 431, 432 may be deformed before the step (S9) of electrically connecting current collectors 431, 432 to positive electrode terminal 302.

### (Configuration of Metal Plate 4300)

As shown in Fig. 20, metal plate 4300 includes a first region 430A to be joined to positive electrode tab groups 250, 280, and a second region 430B to be joined to current collector 420, as well as a connection portion 430C, a hole portion 430D, and a notch 430E, which are provided between first region 430A and second region 430B.

When forming current collector 430, the plurality of metal plates 4300 may be joined together at first regions 430A and second regions 430B (first portion). The plurality of metal plates 4300 are preferably joined together by ultrasonic joining, diffusion joining, or the like, for example. In the case of the diffusion joining, metal plates 4300 stacked are preferably joined together by applying pressure to stacked metal plates 4300 in a state in which stacked metal plates 4300 are heated at a temperature lower than the melting point of each of metal plates 4300. The plurality of metal plates 4300 are joined together before other conductive members (positive electrode tab groups 250, 280 and current collector 420) are joined to first region 430A and second region 430B.

Connection portion 430C (second portion) of current collector 430 preferably includes a region at which the plurality of metal plates 4300 are not joined together. Thus, current collector 430 can be readily bent at connection portion 430C. The portion of each of metal plates 4300 to be bent preferably includes a region at which the plurality of metal plates 4300 are not to be joined together. Moreover, the plurality of metal plates 4300 are preferably not to be joined together at the whole of the portion of each of metal plates 4300 to be bent. Each of the regions (first region 430A and second region 430B) other than connection portion 430C may have a portion at which the plurality of metal plates 4300 are not to be joined together.

It should be noted that at each of the regions at which metal plates 4300 are not joined together, metal plates 4300 may be in abutment with each other. Moreover, a slight clearance may be present between metal plates 4300. At each of the regions at which metal plates 4300 are not joined together, metal plates 4300 are not welded or the like and there is therefore a clear boundary between metal plates 4300. For example, a natural oxide film is present on the surface of each metal plate 4300.

By providing hole portion 430D and notch 430E in connection portion 430C, the cross sectional area of connection portion 430C can be reduced to facilitate bending of current collector 430 at connection portion 430C. Moreover, connection portion 430C can also function as a fuse portion.

Each of metal plates 4300 can be composed of, for example, aluminum or an aluminum alloy. It should be noted that metal plate 4300 can also be composed of copper, a copper alloy, nickel, a nickel alloy, iron, or an iron alloy.

The thickness of one metal plate 4300 is preferably larger than the thickness of one positive electrode tab 260, and is preferably about 3 times or more (more preferably about 5 times or more) as large as the thickness of one positive electrode tab 260. The thickness of one metal plate 4300 is preferably about 0.05 mm or more, and is more preferably about 0.08 mm or more, for example. Moreover, the thickness of one metal plate 4300 is preferably about 0.5 mm or less, is more preferably about 0.3 mm or less, and is further preferably about 0.2 mm or less.

It should be noted that the thickness of one metal plate 4300 is preferably about 1/2 or less of the thickness of current collector 420 on the positive electrode side, and is more preferably about 1/5 or less of the thickness of current collector 420 on the positive electrode side.

It should be noted that the same can be applied to a case where a current collector in which metal plates are stacked is used on the negative electrode side.

The number of metal plates 4300 of each of current collectors 431, 432 can be appropriately changed. The total thickness (first thickness: T1) of each of current collectors 431, 432 is preferably larger than the total thickness (second thickness: T2) of each of positive electrode tab groups 250, 280 joined to current collectors 431, 432. T1/T2 is more preferably about 1.5 or more, and T1/T2 is further preferably about 2 or more.

It should be noted that the "total thickness of each of current collectors 431, 432" means the total thickness of portions of each of current collectors 431, 432 having no irregularities. Moreover, the "total thickness of each of positive electrode tab groups 250, 280" means the total thickness of portions thereof, at which each of positive electrode tab groups 250, 280 is provided, other than joining portion 431A or 432A.

In the present embodiment, current collector 430 constituted of the stack of the plurality of metal plates 4300 is used to provide current collector 430 that can be likely to be stably deformed while suppressing an increase in resistance. As a result, the size of positive electrode current collector 400B can be reduced to improve the energy density of secondary battery 1.

When each of current collectors 430 connected to positive electrode tab groups 250, 280 is electrically connected to positive electrode terminal 302 with first electrode assembly 201 and second electrode assembly 202 being disposed in case main body 110 and then current collector 430 is bent, secondary battery 1 having high energy density and high reliability can be more stably and efficiently manufactured because current collector 430 is constituted of the stack of the plurality of metal plates 4300. In this case, negative electrode tab groups 220, 270 are particularly preferably joined to one surface of current collector 410 with negative electrode tab groups 220, 270 being curved as shown in Fig. 11. It should be noted that the positive electrode side and the negative electrode side may be configured oppositely.

Moreover, in the present embodiment, in the step (S2) of joining current collector 410 to negative electrode tab groups 220, 270, negative electrode tab groups 220, 270 are joined to current collector 410 with first electrode assembly 201 being disposed on one side with respect to current collector 410 and second electrode assembly 202 being disposed on the other side with respect to current collector 410 as shown in Fig. 14. In this state, since each of the main body portions of first electrode assembly 201 and second electrode assembly 202 and current collector 410 are located relatively away from each other, there are many options for joining method, and each of negative electrode tab groups 220, 270 can be relatively short. Since each of negative electrode tab groups 220, 270 is short, the internal space of case 100 can be effectively utilized to further improve the energy density of secondary battery 1.

Moreover, since current collector 431 and current collector 432 are curved in the same direction with first electrode assembly 201 and second electrode assembly 202 being overlapped with each other in the present embodiment, current collector 432 can be disposed by efficiently utilizing a space on the inner peripheral side of the curved portion of current collector 431. As a result, the size of positive electrode current collector 400B can be further reduced to improve the energy density of secondary battery 1.

Moreover, in the present embodiment, by joining current collectors 431, 432 to positive electrode tab groups 250, 280 in advance (S3 and S4), positive electrode tab groups 250, 280 can be protected to suppress damage (deformation, tear, or the like) thereof in the subsequent step (S6) of overlapping first electrode assembly 201 and second electrode assembly 202 with each other and the subsequent step (S8) of inserting first electrode assembly 201 and second electrode assembly 202 into case main body 110. As a result, secondary battery 1 having high reliability can be provided.

### (Supplement)

In the present embodiment, as shown in Fig. 12, current collectors 431, 432 are bent to be curved in the same direction with first electrode assembly 201 and second electrode assembly 202 being overlapped with each other, but current collectors 431, 432 may be bent to be curved in opposite directions.

In the present embodiment, it has been illustratively described that in the state shown in Fig. 12, current collectors 431, 432 are joined to positive electrode tab groups 250, 280 from the same side (left side in the figure with respect to positive electrode tab groups 250, 280). In this case, in the state (Figs. 14 and 15) before overlapping first electrode assembly 201 and second electrode assembly 202 with each other, current collectors 431, 432 are joined to positive electrode tab groups 250, 280 from different sides.

It should be noted that the scope of the present technology is not limited to the above, and in the state shown in Fig. 12, current collectors 431, 432 may be joined to positive electrode tab groups 250, 280 from different sides. In this case, in the state (Figs. 14 and 15) before overlapping first electrode assembly 201 and second electrode assembly 202 with each other, current collectors 431, 432 are joined to positive electrode tab groups 250, 280 from the same side.

In the present embodiment, it has been illustratively described that the bent type current collector 430 constituted of the metal plate stack is used on the positive electrode side (Fig. 12) and current collector 410 constituted of the single member composed of the metal is used on the negative electrode side (Fig. 11); however, the scope of the present technology is not limited thereto, and there may be employed a structure opposite to the above between the positive electrode side and the negative electrode side. Moreover, instead of the single member, current collector 410 formed by integrating a plurality of members may be used.

In the present embodiment, it has been illustratively described that the electrode tab group in which the plurality of electrode tabs are stacked is joined to the current collector; however, the scope of the present technology is not limited thereto, and there may be employed a configuration in which one electrode tab is joined to the current collector.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A method of manufacturing a secondary battery, wherein
the secondary battery includes
a first electrode assembly (201) and a second electrode assembly (202) each including a first electrode (240) and a second electrode (210) having a polarity different from a polarity of the first electrode (240),
a case (100) that accommodates the first electrode assembly (201) and the second electrode assembly (202), and
a first electrode terminal (302) electrically connected to the first electrode (240),
the first electrode assembly (201) includes a first electrode tab (250) disposed at an end portion of the first electrode assembly (201) on one side and electrically connected to the first electrode (240), and a second electrode tab (220) disposed at an end portion of the first electrode assembly (201) on the other side and electrically connected to the second electrode (210),
the second electrode assembly (202) includes a third electrode tab (280) disposed at an end portion of the second electrode assembly (202) on one side and electrically connected to the first electrode (240), and a fourth electrode tab (270) disposed at an end portion of the second electrode assembly (202) on the other side and electrically connected to the second electrode (210),
the secondary battery further includes
a first current collector (431) to which the first electrode tab (250) is joined, the first current collector (431) being constituted of a first stack in which a plurality of metal plates (4300) are stacked, and
a second current collector (410) to which the second electrode tab (220) and the fourth electrode tab (270) are joined,
the method comprising:
producing the first electrode assembly (201) and the second electrode assembly (202);
after producing the first electrode assembly (201) and the second electrode assembly (202), joining the first electrode tab (250) to the first current collector (431);
after producing the first electrode assembly (201) and the second electrode assembly (202), attaining a state in which the second electrode tab (220) and the fourth electrode tab (270) are electrically connected to the second current collector (410) with the first electrode assembly (201) being disposed on one side with respect to the second current collector (410) and the second electrode assembly (202) being disposed on the other side with respect to the second current collector (410);
after the second electrode tab (220) and the fourth electrode tab (270) are electrically connected to the second current collector (410), overlapping the first electrode assembly (201) and the second electrode assembly (202) with each other by bending the second electrode tab (220) and the fourth electrode tab (270); and
after overlapping the first electrode assembly (201) and the second electrode assembly (202) with each other, electrically connecting, to the first electrode terminal (302), the first current collector (431) joined to the first electrode tab (250).

2. The method of manufacturing a secondary battery according to claim 1, wherein
the secondary battery further includes a third current collector (432) to which the third electrode tab (280) is joined, the third current collector (432) being constituted of a second stack in which a plurality of metal plates (4300) are stacked,
the method further comprising: after overlapping the first electrode assembly (201) and the second electrode assembly (202) with each other, electrically connecting, to the first electrode terminal (302), the third current collector (432) joined to the third electrode tab (280).

3. The method of manufacturing a secondary battery according to claim 1, further comprising: after overlapping the first electrode assembly (201) and the second electrode assembly (202) with each other, joining the third electrode tab (280) to the first current collector (431).

4. The method of manufacturing a secondary battery according to any one of claims 1 to 3, further comprising: after electrically connecting, to the first electrode terminal (302), the first current collector (431) joined to the first electrode tab (250), bending the first current collector (431).

5. The method of manufacturing a secondary battery according to any one of claims 1 to 4, wherein
the secondary battery further includes a second electrode terminal (301) electrically connected to the second electrode (210),
the case (100) includes a case main body (110) provided with a first opening (114) located at an end portion of the case (100) on one side and a second opening (113) located at an end portion of the case (100) on the other side, a first sealing plate (130) that seals the first opening (114), and a second sealing plate (120) that seals the second opening (113),
the first electrode terminal (302) is provided on the first sealing plate (130), and
the second electrode terminal (301) is provided on the second sealing plate (120),
the method further comprising:
electrically connecting, to the second electrode terminal (301), the second current collector (410) joined to the second electrode tab (220) and the fourth electrode tab (270); and
after electrically connecting the second current collector (410) to the second electrode terminal (301), inserting the first electrode assembly (201) and the second electrode assembly (202) into the case main body (110) with the first current collector (431) side being inserted first.

6. The method of manufacturing a secondary battery according to claim 5, wherein the electrically connecting the first current collector (431) to the first electrode terminal (302) is performed with the first electrode assembly (201) and the second electrode assembly (202) being disposed in the case main body (110) after inserting the first electrode assembly (201) and the second electrode assembly (202) into the case main body (110).

7. The method of manufacturing a secondary battery according to any one of claims 1 to 6, wherein
the first current collector (431) includes a first portion (430A, 430B) at which the plurality of metal plates (4300) are joined together, and a second portion (430C) at which the plurality of metal plates (4300) are not joined together, and
the first current collector (431) is bent at the second portion (430C).

8. The method of manufacturing a secondary battery according to any one of claims 2 and 4 to 7, wherein the first current collector (431) and the third current collector (432) are curved in the same direction with the first electrode assembly (201) and the second electrode assembly (202) being overlapped with each other.

9. The method of manufacturing a secondary battery according to any one of claims 1 to 8, wherein
a first electrode tab group (250) in which a plurality of the first electrode tabs (250) are stacked is provided, and
a total thickness of the first current collector (431) is larger than a total thickness of the first electrode tab group (250).

10. A secondary battery comprising:
a first electrode assembly (201) and a second electrode assembly (202) each including a first electrode (240) and a second electrode (210) having a polarity different from a polarity of the first electrode (240);
a case (100) that accommodates the first electrode assembly (201) and the second electrode assembly (202); and
a first electrode terminal (302) electrically connected to the first electrode (240), wherein
the first electrode assembly (201) includes a first electrode tab (250) disposed at an end portion of the first electrode assembly (201) on one side and electrically connected to the first electrode (240), and a second electrode tab (220) disposed at an end portion of the first electrode assembly (201) on the other side and electrically connected to the second electrode (210),
the second electrode assembly (202) includes a third electrode tab (280) disposed at an end portion of the second electrode assembly (202) on one side and electrically connected to the first electrode (240), and a fourth electrode tab (270) disposed at an end portion of the second electrode assembly (202) on the other side and electrically connected to the second electrode (210),
the secondary battery further comprising:
a first current collector (431) to which the first electrode tab (250) is joined, the first current collector (431) being constituted of a first stack in which a plurality of metal plates (4300) are stacked; and
a second current collector (410) to which the second electrode tab (220) and the fourth electrode tab (270) are joined, wherein
the first current collector (431) and the second current collector (410) are disposed to be overlapped with each other,
the second electrode tab (220) and the fourth electrode tab (270) are curved in directions in which tips of the second electrode tab (220) and the fourth electrode tab (270) come close to each other, and
the first current collector (431) is bent.
